# EUROPEAN PATENT SPECIFICATION

(11) **EP 0 793 046 B1**
(45) Date of publication and mention of the grant of the patent: **28.11.2001**
(21) Application number: 96301209.1
(22) Date of filing: 01.03.1996
(51) Int. Cl.: F16L 23/028

(54) **Method of gauging and coupling a metal pipe**
Verfahren zur Lehrung und zum Verbinden eines Metallrohres
Procédure de jaugeage et de connexion d'un tuyau métallique

(43) Date of publication of application: 03.09.1997
(73) Proprietor: Tube-Mac Industries, Ltd., Stoney Creek, Ontario L8E 5N8 (CA)
(72) Inventor: Mackay, Gary, Ancaster, Ontario L9G 1T1 (CA)
(74) Representative: SERJEANTS

(56) References cited:
- EP-A- 0 186 716
- AT-B- 227 493
- DE-A- 4 127 498
- FR-A- 2 232 722
- FR-E- 81 547
- US-A- 2 165 621
- US-A- 2 269 629
- US-A- 3 284 112
- US-A- 4 809 418
- US-A- 4 905 492

## Description

### Field of the Invention

The invention relates to a method of gauging and coupling a metal pipe while the end of the pipe is being flared and thereafter coupling the flared pipe to another pipe or other device.

### Background of the Invention

Pipes and tubing are used to carry a variety of fluids, some are liquids and others are gases. These fluids may be under substantial pressures or at standard pressure. Therefore, pipes and tubing are rated according to the fluid pressures which the conduit can carry without rupturing. A particular conduit is considered to be a pipe or tubing depending upon the wall thickness of the conduit, the industry or application in which it is being used, and sometimes upon whether it is plastic or metal. For present purposes and simplicity we will use the term pipe to encompass both pipe and tubing as those terms are used by those skilled in the art.

In hydraulic connections it is quite common to utilize pipes in which the end of the pipe has been flared to form a collar which is placed to abut against a surface of the device to which the pipe is being connected. In order to create the flared end or collar it is customary to provide a clamping die which is pressed against the pipe to be flared at a specified distance away from the end of the pipe. This die typically will have a gripping surface containing teeth or threads which bite into the exterior surface of the pipe being held. The die is pressed against the end of the pipe to hold the pipe during flaring. The flaring process is performed by a flaring machine having an eccentric cone. That cone is pressed against the end of the pipe and rotated circumferentially about the end of the pipe to form a flare. The flare can be at any angle relative to the side of the pipe. For many applications a flat end seal is desired in which case the flare will be at a right angle relative to the exterior surface of the pipe. This pipe flaring practice is quite old, but there have been improvements in the flaring tools. An improved flaring tool and method of using the same for forming a transverse collar on the end of the metal pipe is disclosed in United States Patent No. 4,905,492.

The dies used for clamping the metal ends of the pipe to be flared are quite expensive. Additionally, the clamping action against the pipe being held causes wear, particularly on the gripping surfaces of the dies. When those surfaces have become sufficiently worn the pipe being grasped will slip. Then the surface must be refinished or the die must be scrapped. A second problem with this practice is that a separate set of dies must be made for each diameter of pipe. Consequently, there is a need for a device which an be used in the flaring of pipe ends that will improve die life and enable one to use a single clamping die for holding pipes of more than one diameter.

The art has used rings in couplings for flared and straight pipe. Some of these rings have teeth on the inside surface which will bite into the pipe as a nut or collar is drawn over the ring. Often, the exterior surface of the ring and the mating interior surface of the nut or collar are sloped so that the ring will be pressed against the pipe as the nut or collar are advanced. Examples of this type of coupling can be found in United States Patents Nos 2,165,621 to Donahue et al., 2,269,629 to Kreidel, and 4,809,418 to Burli. A further example can be found in Austrian Patent No. 227493 to Hawle. Today, this type of ring is most commonly used for plastic pipe. Whenever such rings have been used on flared pipe the ring has not been used in any way for or during the flaring process. Furthermore, most of the couplings which utilize such rings for plastic pipe contain rings which are not suitable for metal pipe.

### Summary of the Invention

We provide a method of gauging and coupling a metal pipe having an actual diameter D which may be greater than or less than a nominal diameter Dₙₒₘᵢₙₐₗ by a tolerance T, where D = Dₙₒₘᵢₙₐₗ ± T, the method comprising the steps:
(a) placing a tubular coupling flange around the metal pipe, the coupling flange having a conical inner surface;
(b) placing a split ring around the metal pipe, the split ring having an internal diameter equal to the nominal diameter Dₙₒₘᵢₙₐₗ of the metal pipe and a conical outer surface complementary to the conical inner surface of the coupling flange, and an axial peripheral split (8) with a width W equal to π x the tolerance T;
(c) closing the split ring around the metal pipe if the actual diameter D of the metal pipe is less than the nominal diameter Dₙₒₘᵢₙₐₗ;
(d) rejecting the metal pipe as undersized if the metal pipe slips through the split ring when the split ring is fully closed;
(e) moving the tubular coupling flange axially over the split ring;
(f) rejecting the metal pipe as oversized if the coupling flange fails completely to receive the split ring; and
(g) connecting the coupling flange to an object to which the metal pipe is to be coupled.

Other objects and advantages of the invention will become apparent from a description of certain preferred embodiments shown in the drawings.

### Brief Description of the Drawings

Figure 1 is a perspective view of the split metal ring of the present invention.
Figure 2 is a cross-sectional view taken along the line II-II of Figure 1.
Figure 3 is an end view showing the front end of the split metal ring positioned over a metal pipe and held within a clamping die.
Figure 4 is an end view showing the back end of the split metal ring positioned over a metal pipe and held within a clamping die.
Figure 5 is an end view similar to Figure 4 showing the back end of a second split metal ring positioned over a smaller metal pipe and held within the same clamping die.
Figure 6 is a perspective view of the coupling flange.
Figure 7 is a side view of the coupling flange.
Figure 8 is a sectional view taken along lines VIII-VIII of Figure 6.
Figure 9 is a sectional view taken along lines IX-IX of Figure 6.
Figure 10 is a side view partially in section showing pipes which have been flared and coupled together in accordance with the present invention.
Figures 11 thru 16 are a sequence of side views partially in section showing the sequence for flaring a pipe in accordance with the present invention.

### Description of the Preferred Embodiments

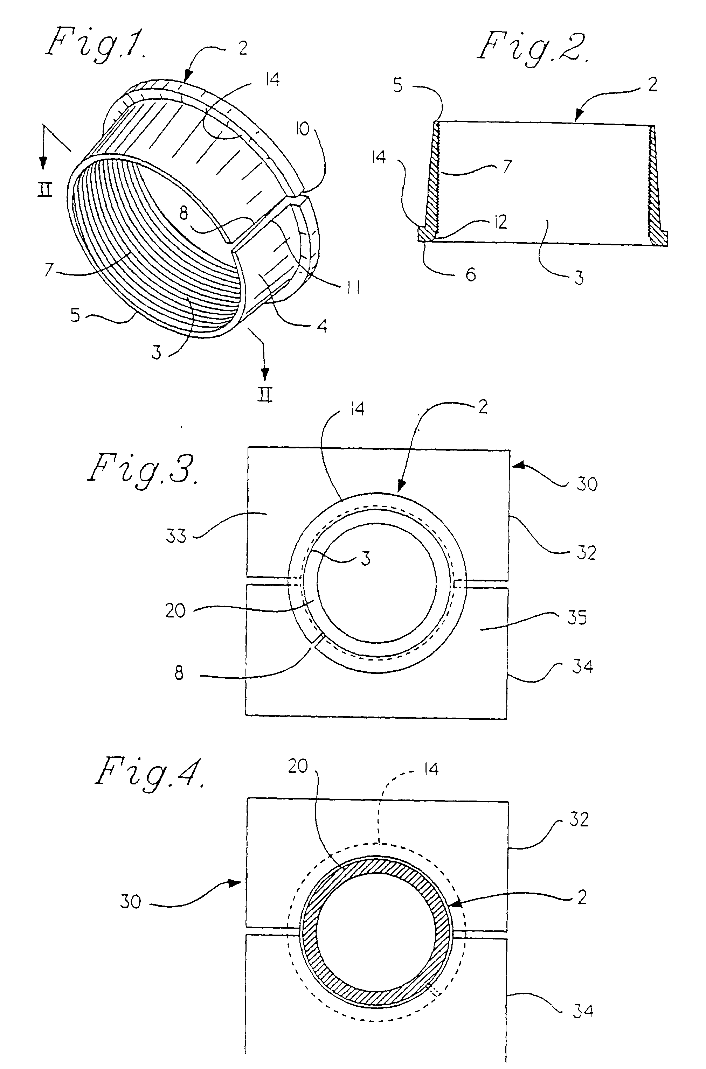

As shown in Figures 1 and 2 we provide a split metal ring 2 having an inside surface 3, an outside surface 4, a back end 5 and front end 6. A transverse split 8 is provided in the ring. Split metal ring 2 is preferably made from spring steel and has a hardness greater than the hardness of the pipe around which it will be placed. As can be seen in Figure 2 the outside surface 4 of the ring is tapered such that the ring is thicker at the front end 6 than at the back end 5. We prefer to provide a collar 14 around the front end 5 of the ring. A radius 12 is provided on the front inside edge about which the pipe is flared. As can be seen for example in Figures 3 and 4, the split metal ring is placed around an end of a pipe 20 to be flared. That pipe will have a nominal outside diameter, as for example 5.08 cm (2") and a wall thickness. Most users of metal pipe will specify pipe according to a nominal outside diameter, such as 5.08 cm (2") with a specified tolerance, such as 0.013 cm (0.005"). Consequently, any pipe which is within the range of 5.067 cm (1.995") and 5.093 cm (2.005") would be acceptable to the buyer. Because we make the distance between opposite sides 10 and 11 of split 8 equal to the specified tolerance the split ring will serve as a gauge to identify undersized pipe. If the ring is compressed to close the split and the pipe being held slips through the ring that pipe is undersized.

The just described method for identifying undersize pipe will typically be used when the pipe is being flared. During that process a die 30 will close around the ring 2 and press the ring against the pipe 20 as shown in Figures 3 and 4. If the pipe has an outside diameter below the specified tolerances, split metal ring 2 will not securely clamp the pipe 20 after the clamping die has compressed the split ring 2 to close split 8. If after clamping, the pipe slips through the split ring the pipe is undersize and should not be used. For the pipe fitter working in the shop this is a very simple technique for determining whether a pipe meets the minimum specification. It involves no use of measuring tools and permits easy identification of undersized pipe by any worker.

Split ring 2 also serves a second purpose. The ring is used to grip the pipe during flaring of the end of the pipe and when the pipe is coupled to another pipe or device. In a conventional prior art flaring process a clamping die, typically comprised of two halves, clamps the end of the pipe being flared such that there is direct contact between the die and the pipe being flared. Then a flaring tool bends the end of the pipe back against the clamping die to form the flare. When completed that flare could be perpendicular to the side wall of the pipe or at any desired angle relative to the side wall of a pipe. If the flare is made perpendicular to the side wall, then the clamping die also serves as the back, or anvil, against which the end of the pipe is pressed.

According to the present invention, ring 2 is placed on the end of the pipe so that the ring 2 will be between the clamping die 30 and the pipe 20 as shown in Figures 3 and 4. Clamping die 30 comprises a top half 32 and bottom half 34. The two arched shaped halves 32 and 34 of the die are brought together to encircle ring 2. As the die closes, it forces split ring 2 against the outside surface of the pipe. This causes the projections 7, which may be threads or annular ribs, to be pressed into the outside surface of the pipe 20, assuming that the pipe is not undersized. Because these projections are harder than the hardness of the pipe they will tend to score the pipe and become embedded in the outside surface of the pipe. After the split ring has been clamped about the pipe flaring tools 38 and 40 are applied to the end of the pipe as shown in Figures 15 and 16. The threads 7 will bite into the pipe resisting the forces of the flaring tools 38 and 40. Consequently, there will be no relative movement between the pipe 20 and split ring 2 during flaring. As can be seen in Figures 15 and 16, collar 14 of the split metal ring extends over the faces 33 and 35 of die halves 32 and 34 preventing relative movement between the split ring 2 and die 30 during flaring. Since it is not necessary to provide any teeth, threads or ribs on the flaring die 30 to grip split ring 2, there will be less wear of the die resulting in much longer die life.

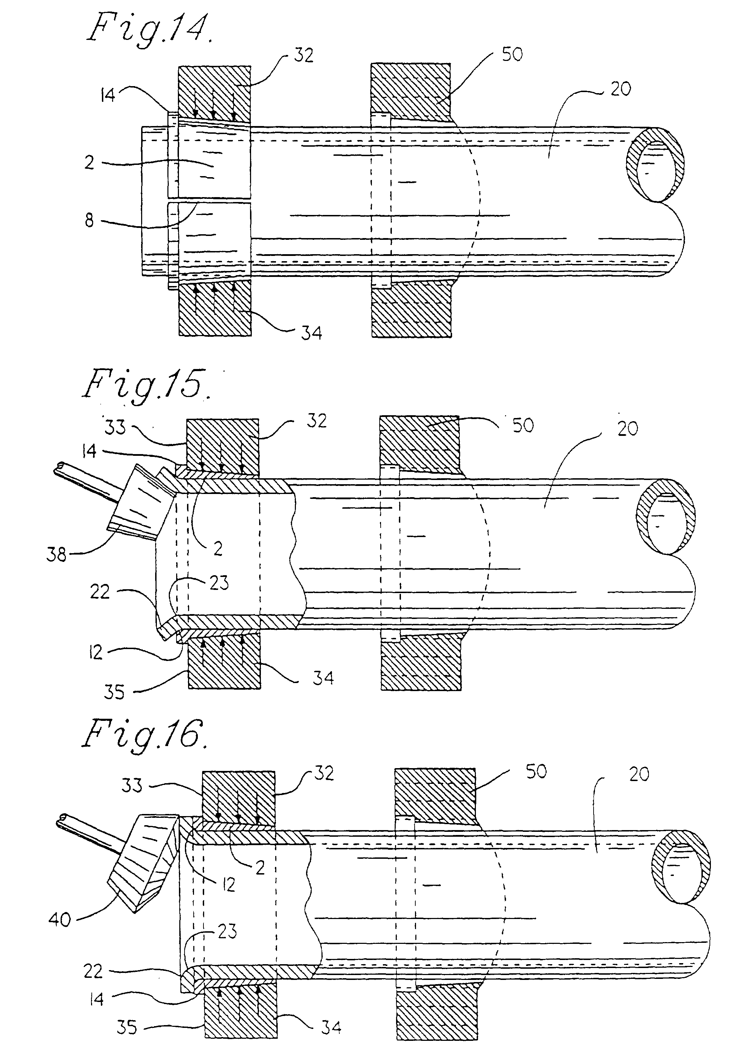

As can be seen in Figures 14 thru 16, the flared end 22 preferably will be perpendicular to the side of the pipe 20 to permit the pipe 20 to be face sealed against a similarly flared pipe, pump housing or other device. We prefer that the front face of collar 14 have a width equal or greater than the width of the portion of the flange 22 which will press against the ring.

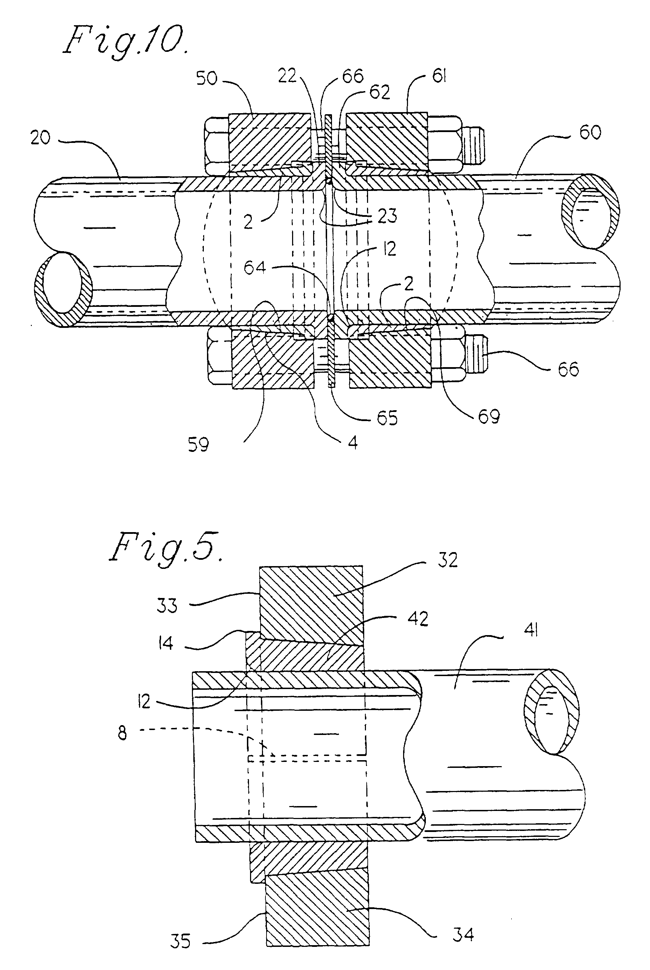

The present system permits one to flange a pipe 41 of smaller diameter than the pipe 20 shown in Figures 3 and 4 using the same die 30. As shown in Figure 5 this is possible because we provide a thicker split metal ring 42. The difference in thickness between split metal ring 42 used for smaller pipe 41 and split metal ring 2 used for pipe 20 is the difference in outside diameters of the two pipes. Because the same clamping die can be used for different diameter pipes a fewer number of dies are required to be maintained in inventory. Consequently, the present invention provides a significant savings over prior art flaring devices and techniques.

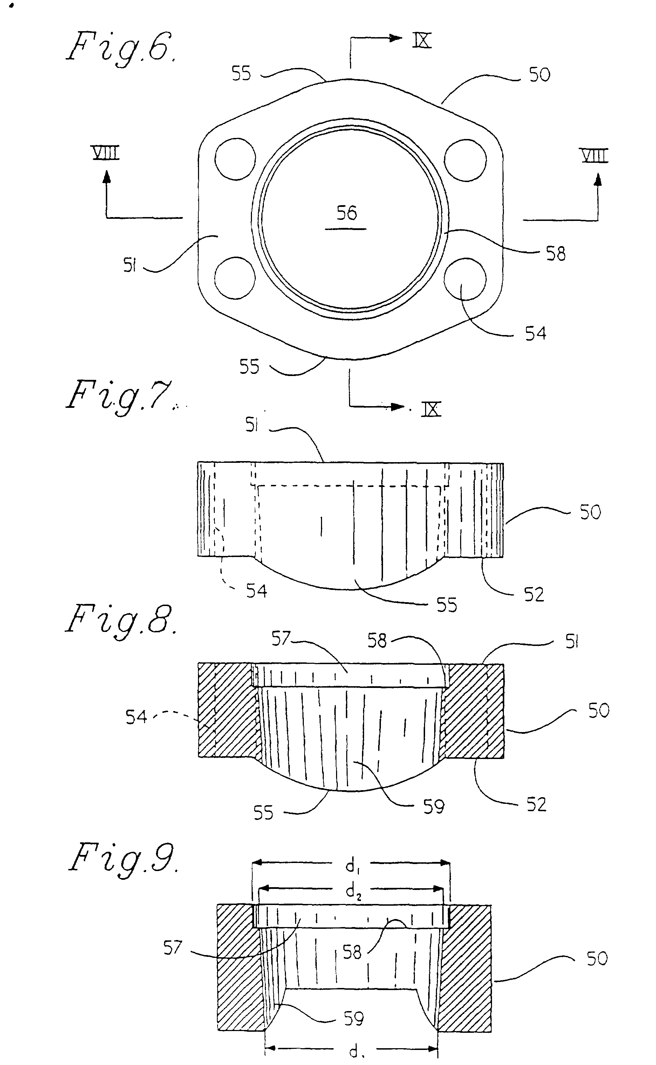

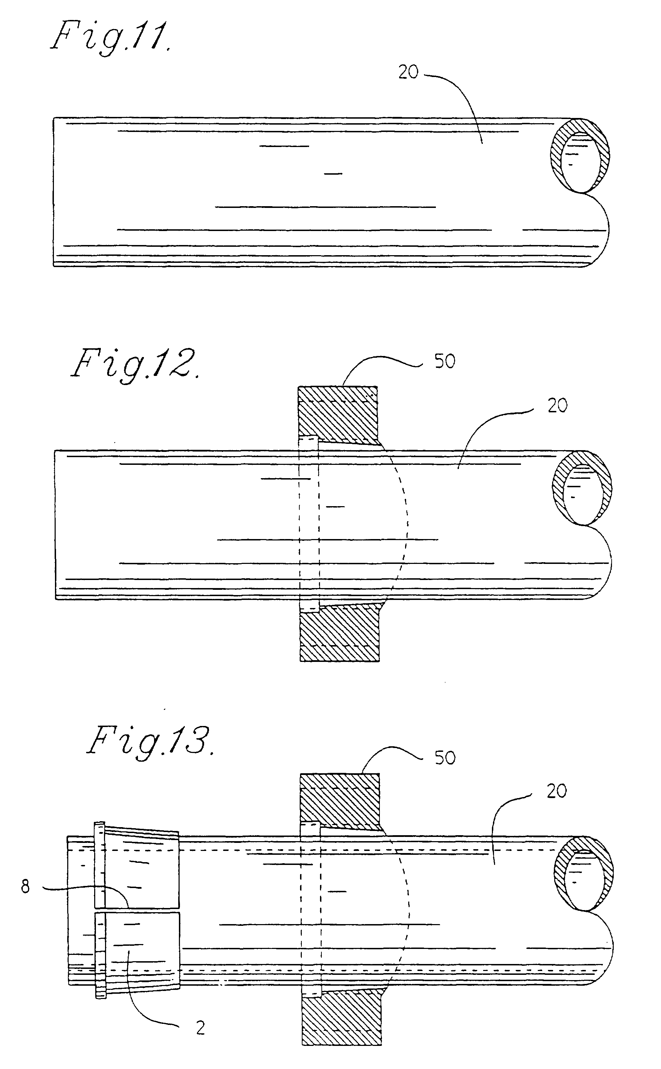

After the pipe has been flared it is ready to be connected to another pipe or device. To make the connection we provide a coupling flange shown in Figures 6, 7, 8 and 9. The coupling flange 50 has a front surface 51 and back surface 52. Bolt holes 54 are provided for connecting the coupling flange 50 to a second pipe 60 and coupling flange 61 or other device (not shown) using bolts 66 shown in Figure 10. We prefer that coupling flanges 50 and 61 be metal forgings. We also prefer to make portions 55 of the coupling flange 50 thicker for added strength. Coupling flange 50 has a central bore 56 sized to receive the split ring 2. As can be seen more clearly in Figures 8 and 9, bore 56 is shaped to have a top portion 57 generally circular in diameter which extends from the top surface 51 to a shoulder 58. The shoulder is sized to receive the collar 14 of split ring 2. At shoulder 58 the bore will have a diameter d₂ which will be less than the diameter d₁ of the bore at the top surface 51. Inside surface 59 of the lower portion of the bore is tapered from shoulder 58 to bottom 52. Consequently, the diameter d₃ at the bottom of the coupling flange will be less than diameter d₂ at shoulder 58. Diameters d₁, d₂ and d₃ are chosen to be equal to the nominal value of-the outside diameter of the pipe to be held plus the specified tolerance and twice the thickness of the split ring 2 which is fitted within the coupling. Consequently, if an oversized pipe is placed within the ring the coupling flange cannot be drawn completely over the ring. For this reason the split metal ring 2 together with the coupling flange 50 serve as a gauge to identify pipe which has an outside diameter greater than the specified nominal value plus the tolerance.

As can be seen from Figure 10, coupling flange 50 is placed over the split ring 2 which is on pipe 20. Typically a seal plate 65 and gasket or O-ring 64 will be placed against the flared ends 22 and 62 of the pipes 20 and 60. Bolts 66 will extend through the coupling flanges 50 and 61 and optionally through the seal plate 65. The bolts are then tightened to couple and seal pipes 20 and 60 together. As the bolts 66 are tightened the inside surfaces 59 and 69 of coupling flanges 50 and 61 will be drawn across the outside surfaces 4 of the split rings 2. Since these surfaces are tapered this action will cause the threads or ribs on the inside surface 3 of the split rings 2 to maintain or increase their bites into pipes 20 and 60 as the pipes are drawn together. Consequently, a portion of the clamping forces will be acting through the biting threads thereby reducing the stress on the back of the flare.

We have found that the coupling shown in Figure 10 can be used for pipes and connections carrying fluids under pressure. For example, a 5.08 cm (2") section of ASTM-50 tubing was statically tested to determine if the coupling would leak at the rated pressure of the flange which was 20.6x10⁶ Pa (3000 psi). A coupling was created as shown in Figure 10. Oil was then pumped into the pipe to a pressure of 20.6x10⁶ Pa (3000 psi) and held at that pressure for one hour. No leaks of the coupling occurred. Based upon this result it is our expectation that the present coupling can be used at higher pressures of up to 34.5x10⁶ Pa (5000 psi) without leaking.

The procedure for flaring the end of a pipe in accordance with the present invention is illustrated in Figures 11 thru 16. One begins with a selected pipe or tubing 20 shown in Figure 11 and preferably then slips flange 50 over the pipe as shown in Figure 12. Optionally, one could slip the flange 50 over the pipe from the opposite end (not shown) after flaring, but this may be inconvenient if the pipe is quite long. Next the split metal ring is fitted over the pipe as shown in Figure 13. This assembly is placed in a flaring machine where a clamp 30 comprised of top 32 and bottom 34 will close pressing the split ring against pipe 20. Projections from the split ring will bite into the pipe holding it in place. An eccentric cone or other tools 38 and 40 are used to flare the end of the pipe 20 around radius edge 12 as shown in Figures 15 and 16. Then, the flaring tool and clamping die are removed. Now flange 50 can be moved over split ring 2 and the assembly is ready for connection to another pipe or device such as is shown in Figure 10.

## Claims

1. A method of gauging and coupling a metal pipe (20) having an actual diameter D which may be greater than or less than a nominal diameter Dₙₒₘᵢₙₐₗ by a tolerance T, where D = Dₙₒₘᵢₙₐₗ ± T, the method comprising the steps:
(a) placing a tubular coupling flange (50) around the metal pipe (20), the coupling flange (50) having a conical inner surface;
(b) placing a split ring (2) around the metal pipe (20), the split ring (2) having an internal diameter equal to the nominal diameter Dₙₒₘᵢₙₐₗ of the metal pipe (20) and a conical outer surface complementary to the conical inner surface of the coupling flange (50), and an axial peripheral split (8) with a width W equal to π x the tolerance T;
(c) closing the split ring (2) around the metal pipe (20) if the actual diameter D of the metal pipe (20) is less than the nominal diameter Dₙₒₘᵢₙₐₗ;
(d) rejecting the metal pipe (20) as undersized if the metal pipe (20) slips through the split ring (2) when the split ring (2) is fully closed;
(e) moving the tubular coupling flange (50) axially over the split ring (2);
(f) rejecting the metal pipe (20) as oversized if the coupling flange (50) fails completely to receive the split ring (2); and
(g) connecting the coupling flange (50) to an object to which the metal pipe (20) is to be coupled.

2. A method according to claim 1, wherein the split ring (2) has a hardness greater than a hardness of the metal pipe (20) and an inner surface (3) having projections (7) extending therefrom.

3. A method according to claim 2, wherein the projections (7) are one of annular ribs, threads and teeth.

4. A method according to claim 2 or claim 3, wherein the projections (7) have a height of between 1 and 2 thousandths of an inch (0.025 to 0.051 mm).

5. A method according to any preceding claim, wherein the conical outer surface of the split ring (2) is such that there is a major thickness at a first end (6) of the split ring (2) and a minor thickness at a second, opposite, end (5) thereof, and wherein the split ring (2) has a shoulder (14) extending outwardly from the first end (6) of the split ring (2) and the coupling flange (50) has an annular recess (57) sized and positioned to receive the shoulder (14).

6. A method according to any preceding claim, wherein step (c) is performed by clamping a die (30) around the conical outer surface of the split ring (2).

7. A method according to claim 6, wherein the clamping die (30) has an inner surface sized and configured to mate with the conical outer surface of the split ring (2).

8. A method according to any preceding claim, further comprising the step of flaring an end of the metal pipe (20).

9. A method according to claim 8, wherein the flaring step is carried out by bending the end of the metal pipe (20) outwardly against a reaction shoulder formed by the split ring (2).

10. A method according to claim 8 or claim 9, further comprising the step of placing a seal (64,65) adjacent the flared end (22,62) of the metal pipe (20).

## Patentansprüche

1. Verfahren zum Ausmessen und Verbinden eines Metallrohrs (20), das einen tatsächlichen Durchmesser D hat, der um eine Toleranz T größer oder kleiner als ein nominaler Durchmesser Dₙₒₘᵢₙₐₗ sein kann, wobei D = Dₙₒₘᵢₙₐₗ ± T, wobei das Verfahren die folgenden Schritte umfaßt:
(a) Anordnen eines röhrenförmigen Verbindungsflanschs (50) um das Metallrohr (20) herum, wobei der Verbindungsflansch (50) eine konische innere Oberfläche hat;
(b) Anordnen eines gespaltenen Rings (2) um das Metallrohr (20) herum, wobei der gespaltene Ring (2) einen inneren Durchmesser hat, der gleich dem nominalen Durchmesser Dₙₒₘᵢₙₐₗ des Metallrohrs (20) ist, sowie eine konische äußere Oberfläche, die zu der konischen inneren Oberfläche des Verbindungsflanschs (50) paßt, und einen axialen peripheren Spalt (8) mit einer Breite W, die gleich π x Toleranz T ist;
(c) Schließen des gespaltenen Rings (2) um das Metallrohr (20), wenn der tatsächliche Durchmesser D des Metallrohrs (20) kleiner ist als der nominale Durchmesser Dₙₒₘᵢₙₐₗ;
(d) Zurückweisen des Metallrohrs (20) als zu klein, wenn das Metallrohr (20) durch den gespaltenen Ring (2) rutscht, wenn der gespaltene Ring (2) vollständig geschlossen ist;
(e) Bewegen des röhrenförmigen Verbindungsflanschs (50) axial über den gespaltenen Ring (2);
(f) Zurückweisen des Metallrohrs (20) als zu groß, wenn es dem Verbindungsflansch (50) vollständig nicht gelingt, den gespaltenen Ring (2) aufzunehmen; und
(g) Verbinden des Verbindungsflanschs (50) mit einem Gegenstand, mit dem das Metallrohr (20) verbunden werden soll.

2. Verfahren nach Anspruch 1, wobei der gespaltene Ring (2) eine Härte hat, die größer ist als eine Härte des Metallrohrs (20), und eine innere Oberfläche (3). von der sich Vorsprünge (7) erstrecken.

3. Verfahren nach Anspruch 2, wobei die Vorsprüng (7) entweder ringförmige Rippen oder Gewinde oder Zähne sind.

4. Verfahren nach Anspruch 2 oder Anspruch 3, wobei die Vorsprünge (7) eine Höhe von zwischen einem und zwei tausendstel eines Inchs haben (0,025 bis 0,051 mm).

5. Verfahren nach einem der vorhergehenden Ansprüche, wobei die konische äußere Oberfläche des gespaltenen Rings (2) so gestaltet ist, daß sich eine größere Dicke an einem ersten Ende (6) des gespaltenen Rings (2) und eine kleinere Dicke an einem zweiten, entgegengesetzten Ende (5) davon befindet, und wobei der gespaltene Ring (2) eine Schulter (14) hat, die sich nach außen von dem ersten Ende (6) des gespaltenen Rings (2) erstreckt, und wobei der Verbindungsflansch (50) eine ringförmige Ausnehmung (57) hat, die so bemessen und angeordnet ist, daß sie die Schulter (14) aufnimmt.

6. Verfahren nach einem der vorhergehenden Ansprüche, wobei Schritt (c) ausgeführt wird, indem eine Form (30) um die konische äußere Oberfläche des gespaltenen Rings (2) herum aufgeklemmt wird.

7. Verfahren nach Anspruch 6, wobei die Klemmform (30) eine innere Oberfläche hat, die so bemessen und konfiguriert ist, daß sie mit der konischen äußeren Oberfläche des gespaltenen Rings (2) zusammenpasst.

8. Verfahren nach einem der vorhergehenden Ansprüche, wobei es weiterhin den Schritt des Aufweitens eines Endes des Metallrohrs (20) aufweist.

9. Verfahren nach Anspruch 8, wobei der Schritt des Aufweitens durch ein Biegen des Endes des Metallrohrs (20) nach außen gegen eine Reaktionsschulter ausgeführt wird. die durch den gespaltenen Ring (2) gebildet ist.

10. Verfahren nach Anspruch 8 oder Anspruch 9, wobei es weiterhin den Schritt des Anordnens einer Dichtung (64, 65) in der Nähe des aufgeweiteten Endes (22, 62) des Metallrohrs (20) umfaßt.

## Revendications

1. Procédé de jaugeage et de connexion d'un tuyau métallique (20) ayant un diamètre réel D qui peut être supérieur ou inférieur à un diamètre nominal Dₙₒₘᵢₙₐₗ d'une valeur de tolérance T, où D = Dₙₒₘᵢₙₐₗ ± T, le procédé comprenant les étapes consistant à :
(a) placer une bride d'accouplement tubulaire (50) autour du tuyau métallique (20), la bride d'accouplement (50) ayant une surface intérieure conique ;
(b) placer une bague fendue (2) autour du tuyau métallique (20), la bague fenduc (2) ayant un diamètre intérieur égal au diamètre nominal Dₙₒₘᵢₙₐₗ du tuyau métallique (20) et une surface extéricure conique complémentaire de la surface intérieure conique de la bride d'accouplement (50), et une fente périphérique axiale (8) d'une largeur W égale à π x la tolérance T ;
(c) fermer la bague fendue (2) autour du tuyau métallique (20) si le diamètre réel D du tuyau métallique (20) est inférieur au diamètre nominal Dₙₒₘᵢₙₐₗ;
(d) rejeter le tuyau métallique (20) comme ayant des dimensions insuffisantes si le tuyau métallique (20) glisse dans la bague fendue (2) lorsque la bague fendue (2) est complètement fermée ;
(e) déplacer la bride d'accouplement tubulaire (50) de manière axiale sur la bague fendue (2) ;
(f) rejeter le tuyau métallique (20) comme ayant des dimensions excessives si la bride d'accouplement (50) n'arrive pas du tout à recevoir la bague fendue (2) ; et
(g) raccorder la bride d'accouplement (50) à un objet auquel le tuyau métallique (20) doit être connecté.

2. Procédé selon la revendication 1, dans lequel la bagne fendue (2) a une dureté supérieure à la dureté du tuyau métallique (20) et une surface intérieure (3) depuis laquelle s'étendent des saillies (7).

3. Procédé selon la revendication 2, dans lequel les saillies (7) sont celles de nervures annulaires, filetages ou dents.

4. Procédé selon la revendication 2 ou la revendication 3, dans lequel les saillies (7) ont une hauteur comprise entre 0,025 et 0,051 mm (1 et 2 millièmes de pouce).

5. Procédé selon l'une quelconque des revendications précédentes, dans lequel la surface extérieure conique de la bague fendue (2) est telle qu'il y a une forte épaisseur à une première extrémité (6) de la bague fendue (2) et une faible épaisseur à une seconde extrémité (5), opposée, de celle-ci, et dans lequel la bague fendue (2) a un épaulement (14) s'étendant vers l'extérieur depuis la première extrémité (6) de la bague fendue (2) et la bride d'accouplement (50) a un évidement annulaire (57) dont les dimensions et la position lui permettent de recevoir l'épaulement (14).

6. Procédé selon l'une quelconque des revendications précédentes, dans lequel l'étape (c) est accomplie en serrant une matrice (30) autour de la surface extérieure conique de la bague fendue (2).

7. Procédé selon la revendication 6, dans lequel la matrice de serrage (30) a une surface intérieure dont les dimensions et la configuration correspondent à la surface extérieure conique de la bague fendue (2).

8. Procédé selon l'une quelconque des revendications précédentes, comprenant en outre l'étape consistant à évaser une extrémité du tuyau métallique (20).

9. Procédé selon la revendication 8, dans lequel l'étape d'évasement est accomplie en courbant l'extrémité du tuyau métallique (20) vers l'extérieur contre un épaulement de réaction formé par la bague fendue (2).

10. Procédé selon la revendication 8 ou la revendication 9, comprenant en outre l'étape consistant à placer un joint d'étanchéité (64, 65) au voisinage immédiat de l'extrémité évasée (22, 62) du tuyau métallique (20).
